# EUROPÄISCHE PATENTSCHRIFT

(11) **EP 2 918 200 B1**
(45) Veröffentlichungstag und Bekanntmachung des Hinweises auf die Patenterteilung: **10.04.2019**
(21) Anmeldenummer: 15156519.9
(22) Anmeldetag: 25.02.2015
(51) Int. Cl.: A47J 31/44

(54) **Höhenverstellbare Abstellfläche sowie Vorrichtung zum Getränkezubereiten mit solcher Abstellfläche**
Height adjustable storage area and device for preparing drinks with such a storage area
Aire de stockage réglable en hauteur et dispositif destiné à la préparation de boissons doté d'une telle aire de stockage

(30) Priorität: 12.03.2014 DE 102014204611
(43) Veröffentlichungstag der Anmeldung: 16.09.2015
(73) Patentinhaber: WMF Group GmbH, 73312 Geislingen/Steige (DE)
(72) Erfinder: Witt, Axel, 73312 Geislingen (DE)
(74) Vertreter: Pfenning, Meinig & Partner mbB

(56) Entgegenhaltungen:
- CN-Y- 2 737 277
- DE-A1- 2 922 022
- DE-U1-202006 017 049
- US-A- 5 161 455

## Beschreibung

Die vorliegende Erfindung bezieht sich auf eine höhenverstellbare Abstellfläche zum Abstellen von Behältnissen zur Getränkeaufnahme sowie auf eine Vorrichtung zum Getränkezubereiten (insbesondere: Kaffeemaschine) mit einer solchen höhenverstellbaren Abstellfläche.

In der Gastronomie werden für die Vielzahl der Produkte einer Kaffeemaschine unterschiedliche Geschirre (Tassen) verwendet. Diese Tassen für Espresso, Cafe Creme, Cappuccino, ... unterscheiden sich stark in Größe und Form. Werden diese unterschiedlichen Geschirre bzw. Tassen aus einer einheitlichen Position gefüllt, so ist diese Position an dem höchsten zu befüllenden Gefäß ausgerichtet. Für die kleineren Tassen wie beispielsweise Espressotassen muss daher der aufgebrühte, die Kaffeemaschine verlassende Kaffee aus einer großen Höhe in die Tassen fallen, was unweigerlich zu einem Verspritzen des Umfeldes wie auch zu einer Zerstörung der gewünschten Crema führt. Ähnlich verhält es sich auch bei der Ausgabe von Milchschaum, wenn die Ausgabehöhe der Tasse zu hoch ist.

Zur Lösung dieses Problems sind aus dem Stand der Technik höhenverstellbare Getränkeausläufe der Kaffeemaschine bekannt (siehe beispielsweise DE 10 2011 081 732 A1 oder EP 1 531 708 B1). Zudem kennt der Stand der Technik einen horizontal wegdrehbaren oberen Tassentisch (US 8,205,647 B2) sowie eine Ablage, die in Einschubleistenausnehmungen auf unterschiedlicher Höhe einschiebbar ist (DE 20 2013 003 918 U1). Auch ist eine Höhenverstellung über einen drehfesten, höhenverstellbaren Stempel bekannt: WO 2012/110287 A1. Schließlich ist eine Höhenverstellung eines Tassenpodests mit Hilfe eines Zahnriemen-/Kettenantriebs bekannt, vgl. DE 10 2011003 070 A1.

Die DE 20 2006 017049 U1 beschreibt ein Ausgabegerät für fliess- oder schüttfähige Güter, mit einer Ausgabeöffnung für die Güter, die in einer Nische an einer Frontseite des Geräts platziert ist, und mit einem wenigstens eine erste Abstellfläche für einen an der Ausgabeöffnung zu befüllenden Behälter aufweisenden Abstellteil, dadurch gekennzeichnet, dass das Abstellteil an der Nische zwischen einer ersten Stellung, in welcher die erste Abstellfläche der Ausgabeöffnung in einem ersten Abstand gegenüberliegt, und einer zweiten Stellung geführt bewegbar ist, in der wenigstens eine Abstellfläche der Ausgabeöffnung in einem zweiten Abstand gegenüberliegt, der grösser als der erste Abstand ist.

Die CN 2 737 277 Y betrifft einen beweglichen Becherhalterahmen, der vor allem in einer Wasserplatte einer Getränkezubereitungsvorrichtung eingesetzt ist und der aus einem Tragrahmen und einem weiteren beweglichen Rahmen besteht, wobei die beiden Seiten an einem Ende des Tragrahmens jeweils und vertikal mit einem umgekehrt U-förmigen Rahmenkörper verschweißt sind.

Die DE 29 22 022 A1 beschreibt: Kaffeemaschine mit einem Stelltisch für ein Auffanggefäß, dem zur Höhenverstellung ein an einem an der Maschine ortsfesten Führungsorgan vertikal verschiebliches und festklemmbares Tragteil zugeordnet ist, wobei das Tragteil am Führungsteil mittels einer Ausnehmung des einen und eines die Ausnehmung mit Spiel durchsetzenden stabförmigen Elementes des anderen zeilegelagert ist, dadurch gekennzeichnet, dass die Ausnehmung und das stabförmige Element jeweils einen etwa ovalen Querschnitt aufweisen, wobei der größte Durchmesser (des stabförmigen Elements) größer ist als der kleinste Durchmesser der Ausnehmung und das Tragteil aus einer Klemmstellung, bei welcher das stabförmige Element durch Reibung in der ovalen Ausnehmung festgeklemmt ist, in eine Verschiebestellung mit etwa gleichgerichteten größten Durchmessern der ovalen Querschnitte verschwenkbar ist.

Die US 5 161 455 A beschreibt: Ein Brühgerät, das verwendet werden kann, um entweder heißen Kaffee oder Eistee herzustellen. Es weist einen einziehbaren Dekanter als Stützplattform auf, die in der Lage ist, die Übersetzung zwischen einer ausgefahrenen und einer zurückgezogenen Position herzustellen.

Ausgehend vom Stand der Technik ist es die Aufgabe der vorliegenden Erfindung, eine Alternative für eine höhenverstellbare Abstellfläche (nachfolgend auch als Abstelltisch oder Tassentisch bezeichnet) zur Verfügung zu stellen. Insbesondere soll die Abstellfläche einfach aufgebaut sein, rein mechanisch ohne elektrischen Antrieb verstellbar sein und einen robusten tagtäglichen Umgang mit der Höhenverstellung in der Gastronomie erlauben.

Diese Aufgaben werden durch eine höhenverstellbare Abstellfläche gemäß Anspruch 1 sowie durch eine Vorrichtung zum Getränkezubereiten umfassend eine solche Abstellfläche gemäß Anspruch 14 gelöst. Aufgabe der vorliegen den Erfindung ist es schließlich, eine höhenverstellbare, ebene Tassenabstellfläche zu schaffen, die einfach und schnell in der Bedienung der Höhenverstellung ist, die robust und stabil im rauen Alltagsbetrieb ist und die passend für die jeweilige Tassengröße eine gute, nicht zu große Füllhöhe bietet. Vorteilhafte Ausgestaltungsvarianten lassen sich jeweils den abhängigen Ansprüchen entnehmen.

Nachfolgend wird die vorliegende Erfindung zunächst allgemein, dann anhand eines Ausführungsbeispiels beschrieben, dabei können jeweils einzelne Merkmale des gezeigten Ausführungsbeispiels für sich eine Bereicherung des Standes der Technik darstellen und Merkmale der abhängigen Ansprüche können auch auf andere Art und Weise als im Ausführungsbeispiel gezeigt miteinander kombiniert werden.

Eine erfindungsgemäße höhenverstellbare Abstellfläche beschreibt Anspruch 1. Die erfindungsgemäße Abstellfläche wird nachfolgend alternativ auch als Abstelltisch, Tassentisch oder ganz allgemein Tisch bezeichnet. Dies erfolgt, obwohl die Tischauflage im engeren Sinn (sozusagen die Tischplatte) gemeint ist, ohne dass es auf Tischbeine oder dergleichen ankommt. Zudem wird der Begriff der Tasse nachfolgend allgemein für jegliches Behältnis, das zur Aufnahme eines Getränkes geeignet ist, verwendet (es können somit auch Gläser, Becher, etc. auf die Abstellfläche aufgestellt werden). Der zweite Abschnitt wird nachfolgend alternativ auch als zweiter Teil des Tassentisches und der erste Abschnitt nachfolgend alternativ auch als erster Teil des Tassentisches bezeichnet. Der Begriff des Raums im Anspruch 1 entspricht in der Regel dem Weltkoordinatensystem, in dem beispielsweise die erfindungsgemäße Vorrichtung zum Getränkezubereiten (insbesondere: deren Gehäuse) ortsfest angeordnet ist, so dass die lageändernde Beweglichkeit des ersten Abschnitts relativ zu dieser Vorrichtung ermöglicht ist.

Vom Anspruch 1 ist ein Bewegen der beiden Abschnitte zum Aufstellen des Tassentisches in eine Hinrichtung umfasst: Siehe nachfolgendes Ausführungsbeispiel, wenn der zweite Abschnitt des Tassentisches bzw. der Abstellfläche in die obenliegende Position gebracht wird. Ebenso umfasst Anspruch 1 jedoch, dass durch eine lageändernde Bewegung des ersten Abschnitts in Rückrichtung (also in eine Richtung entgegengesetzt zur Hinrichtungsbewegung) und durch ein Verdrehen oder Verschwenken des ersten und des zweiten Abschnitts relativ zueinander in die Rückrichtung (also in eine Richtung entgegengesetzt zum Verdrehen oder Verschwenken in Hinrichtung) der zweite Abschnitt wieder aus der zweiten Stellung in die erste Stellung gebracht bzw. bewegt wird.

Dabei liegen vorzugsweise die erste und die zweite Achse (sowie auch die dritte Achse, siehe hierzu Patentanspruch 7) parallel zueinander, beabstandet voneinander und horizontal im Raum bzw. Weltkoordinatensystem. Der erste Abschnitt und der zweite Abschnitt sind so ausgeformt und kooperieren in ihren Bewegungen so, dass der zweite Abschnitt in der zweiten Stellung weiter oben positioniert ist, als in der ersten Stellung.

Erste vorteilhafterweise realisierbare Merkmale lassen sich Anspruch 2 entnehmen.

Weitere vorteilhafterweise realisierbare Merkmale lassen sich den Ansprüchen 3 bis 5 entnehmen.

Gemäß Anspruch 5 bilden der erste und der zweite Abschnitt herausklappbare Teile des Abtropfgitters aus, wobei ein relativ zum Weltkoordinatensystem ortsfest angeordneter Teil des Abtropfgitters mit dem zweiten Abschnitt (und ggfs. auch mit Teilen vom ersten Abschnitt) zusammen in der ersten Stellung eine (relativ zur Abstellfläche des zweiten Abschnitts alleine) vergrößerte, ebene Abstellfläche für eine hohe Tasse in einer relativ zum Gehäuse der Vorrichtung gesehen untenliegenden Position bildet. Der erste und der zweite Abschnitt sind dann aus der vergrößerten Fläche heraus nach oben klappbar, so dass in der zweiten Stellung der zweite Abschnitt alleine eine (verkleinerte) ebene Abstellfläche für eine niedrigere Tasse zum Abstellen derselben in einer relativ zum Gehäuse der Vorrichtung gesehen obenliegenden (also oberhalb der ersten Stellung liegenden) Stellung bildet (in der zweiten Stellung wird also die Abstellfläche für eine Tasse allein durch den zweiten Abschnitt zur Verfügung gestellt, während in der ersten Stellung eine Tasse sowohl auf die obenliegende Oberfläche des ersten wie auch des zweiten Abschnitts aufgestellt werden kann).

Weitere vorteilhafterweise realisierbare Merkmale lassen sich den abhängigen Ansprüchen 6 und 7 entnehmen.

In einer Ausbildung gemäß Anspruch 6 und Anspruch 7 bedeutet dies, dass es gerade diese stabile horizontale Ausrichtung des zweiten Abschnitts ist, die in der zweiten Stellung die horizontal ausgerichtete Fläche zum Aufstellen eines Behältnisses bietet. Im Gegensatz zum ausgeklappten Zustand steht der angeklappte Zustand des Abstützelementes, wobei dies bedeutet, dass das Abstützelement im Wesentlichen parallel zu dem zweiten Abschnitt ausgerichtet ist. Das Abstützelement ist bevorzugt ein Stützfuß, wobei dieser Stützfuß mehrere einzelne, an zwei sich gegenüberliegenden Seiten des zweiten Abschnitts angeordnete und von diesem wegklappbare Stützelemente (Seitenträger) aufweisen kann.

Weitere vorteilhafterweise realisierbare Merkmale lassen sich den Ansprüchen 8 und 9 entnehmen.

Gemäß Anspruch 8 kann das Gegenstück so ausgeformt und positioniert sein, dass es auch in der ersten Stellung mithilft, die mechanische Stabilität einer aus zumindest Teilen des ersten Abschnitts und aus zumindest Teilen des zweiten Abschnitts ausgebildeten, zum Aufstellen eines Behältnisses geeigneten Stellfläche in der ersten (also unteren) Stellung zu gewährleisten.

Gemäß Anspruch 9 können auch mehrere beabstandet voneinander positionierte Gegenstücke zum Einstellen mehrerer unterschiedlicher (zumindest näherungsweise horizontaler) oberer Tischstellungen vorhanden sein (im nachfolgenden Ausführungsbeispiel nicht gezeigt). Vorzugsweise sind dabei genau zwei Gegenstücke vorhanden, so dass zwei unterschiedlich hohe obere Tischstellungen realisierbar sind. Somit lässt sich z.B. eine Zwischenstellung zwischen der ersten und der zweiten Stellung zum Aufstellen halbhoher Tassen realisieren.

Weitere vorteilhafterweise realisierbare Merkmale lassen sich Anspruch 10 entnehmen. Gemäß dieser Ausführung kann der zweite Abschnitt an seinem dem ersten Abschnitt zugewandten Ende einen in der zweiten Stellung am ersten Ab- schnitt anstoßenden mechanischen Anschlag aufweisen. Die Konstruktion kann also so ausgeführt sein, dass die auf den überkragenden Teil wirkende Schwerkraft den zweiten Abschnitt um die dritte Achse drehen würde und somit die Horizontallage des zweiten Abschnitts in der zweiten Stellung durch ein nach vorne Überkippen des überkragenden Teils relativ zum ersten Abschnitt in sich zusammenfallen würde (d.h. die aus dem ersten und dem zweiten Abschnitt ausgebildete Abstellfläche würde auf unerwünschte Weise in sich zusammenklappen), wenn es diesen Anschlag nicht gäbe. Dieser Anschlag verhindert ein nach vorne Überkippen des zweiten Abschnitts relativ zum ersten Abschnitt aus der Horizontallage und stabilisiert somit die gewünschte Horizontallage.

Weitere vorteilhafterweise realisierbare Merkmale lassen sich dem abhängigen Anspruch 11 entnehmen.

Gemäß Anspruch 11 kann diese mechanische Kopplung der beweglichen Lagerungen des zweiten Abschnitts am ersten Abschnitt und des Abstützelementes am zweiten Abschnitt insbesondere über eine Verzahnung realisiert sein. Die Bewegung des Abstützelementes an seinem der dritten Achse zugewandten Ende um die dritte Achse und die Bewegung des zweiten Abschnitts an seinem der zweiten Achse zugewandten Ende um die zweite Achse können also mechanisch so gekoppelt sein, dass über die Verzahnung und die dritte Achse das Abstützelement herausgeschwenkt wird, wenn der zweite Abschnitt in die Waagrechte bzw. Horizontallage geschwenkt wird.

Weitere vorteilhafterweise realisierbare Merkmale lassen sich Anspruch 12 entnehmen.

Die höhenverstellbare Abstellfläche kann also mit ihren beiden Abschnitten durch den weiteren Anschlag in der ersten Stellung eine Position einnehmen, in der die beiden Abschnitte eine im Vergleich zur alleine von dem zweiten Abschnitt ausgebildeten Fläche zum Aufstellen von Gefäßen vergrößerte, ebene, in sich stabile Stellfläche zur Verfügung stellen. Durch den weiteren Anschlag wird insbesondere ein (wegen der Verdreh- oder Verschwenkbarkeit der beiden Abschnitte relativ zueinander und/oder der Verdreh- oder Verschwenkbarkeit des ersten Abschnitts um die erste Achse ansonsten eventuell resultierendes) Schwerkraftbedingtes Durchhängen des ersten und des zweiten Abschnittes verhindert. Der weitere Anschlag stellt also (ggfs. in Verbindung mit dem vorbeschriebenen mechanischen Gegenstück) sicher, dass der erste Abschnitt und der zweite Abschnitt in der ersten Stellung Schwerkraft-bedingt unbeweglich, also stabil im Raum liegen und aus dieser Position bzw. Stellung heraus lediglich ein Verbringen des ersten und des zweiten Abschnitts nach oben, also in die zweite Stellung, nicht jedoch in die entgegengesetzte Richtung, ermöglicht ist.

Weitere vorteilhafterweise realisierbare Merkmale lassen sich Anspruch 13 entnehmen.

Die Rückkehr von der oberen in die untere Stellung kann somit über die Gewichtskraft des ersten Abschnitts und des zweiten Abschnitts ermöglicht sein: Vorteilhafterweise ist auf der dem ersten Abschnitt zugewandten Seite des zweiten Abschnitts (oder auf der dem zweiten Abschnitt zugewandten Seite des ersten Abschnitts) eine Eingriffsmöglichkeit, beispielsweise in Form einer Aussparung, für mindestens einen Finger eines Benutzers vorgesehen, mit der der Benutzer den ersten und den zweiten Abschnitt nach oben ziehen und den zweiten Abschnitt in seine obenliegende zweite Stellung bringen kann. Um den ersten Abschnitt und den zweiten Abschnitt wieder relativ zum Gehäuse der Vorrichtung gesehen abzusenken, kann durch einfaches, weiteres Hochziehen des zweiten Abschnitts (z.B. durch Hochschieben des zweiten Abschnitts an seiner dem ersten Abschnitt abgewandt liegenden Vorderseite) aus der oberen zweiten Stellung zunächst der Eingriff des Abstützelementes und des Gegenstücks dazu gelöst werden und der erste und der zweite Ab- schnitt können dann anschließend einfach fallengelassen werden, so dass sie beide Schwerkraft-bedingt in eine Stellung, die der ersten Stellung des zweiten Abschnitts entspricht, zurückfallen.

Die vorliegende Erfindung beschreibt eine höhenverstellbare Abstellfläche bzw. Tassenablage, die sich beispielsweise durch Ziehen mit einem Finger mittels einer Aussparung (Fingerloch) soweit hochziehen lässt, bis sich der zweite Abschnitt in der oberen Horizontallage einrasten lässt, indem das Abstützelement in Eingriff mit dem Gegenstück gebracht wird. Die Abstellfläche lässt sich aus dieser oberen Stellung wieder in die untere Stellung bringen, indem die Abstellfläche bzw. der zweite Abschnitt derselben leicht mit dem Finger an der Unterseite angetippt wird, so dass die Abstellfläche Schwerkraft-bedingt in ihre untere Stellung zurückfällt.

Gegenüber den aus dem Stand der Technik bekannten Vorgehensweisen hat die vorliegende Erfindung insbesondere die vorliegenden Vorteile:
- Es ist kein höhenverstellbarer Getränkeauslauf notwendig, so dass beispielsweise keine Medienschläuche mitgenommen werden müssen. Somit vereinfacht sich die Handhabung und die Reinigung. Auch der relativ hohe konstruktive Aufwand für die Mitnahme der Medienschläuche (wie z.B. für Milch, Milchschaum, Wasser, Dampf, Kaffee ...), der notwendig ist, damit die Schläuche nicht knicken und nach dem Getränkebezug leerlaufen und nicht Reste in den Leitungen verbleiben, die mit dem nächsten Produkt ausgegeben werden, lässt sich so vermeiden. (Längere Ausgabeleitungen wie sie im Stand der Technik bei Schlauchmitnahme notwendig sind, wirken sich zudem negativ auf die Getränketemperatur und die Getränkequalität (Crema, Schaumqualität) aus.)
- Es ist eine schnelle und einfache Bedienung der höhenverstellbaren Abstellfläche während des Betriebs möglich.
- Die Erfindung stellt eine stabile und ebene, hinsichtlich ihrer Größe variabel gestaltbare Abstellfläche zur Verfügung.
- Die Erfindung bietet einen einfachen und mechanisch robusten Aufbau.
- In der unteren Stellung, also bei Nichtbenutzung der oberen Stellung, kann die Abstellfläche optisch vorteilhaft im Tropfgitter integriert sein.

Nachfolgend wird ein Ausführungsbeispiel der Erfindung im Detail beschrieben. Dabei zeigen:
Figur 1 die erfindungsgemäße Abstellfläche in der hochgeklappten, oberen Stellung in einer dreidimensionalen Ansicht.
Figur 2 die Abstellfläche in derselben Stellung, jedoch in einer Seitenansicht.
Figur 3 ein Detail der beweglichen Verbindung zwischen dem ersten Abschnitt und dem zweiten Abschnitt in der oberen Stellung.
Figur 4 ein weiteres Detail dieser beweglichen Verbindung.
Figur 5 eine dreidimensionale Ansicht der Abstellfläche in ihrer unteren Stellung, bei der der erste und der zweite Abschnitt in das Abtropfgitter integriert sind.
Figur 6 eine Seitenansicht der unteren Stellung.
Figur 7 eine Detailansicht der beweglichen Verbindung des ersten und des zweiten Abschnitts in der ersten, unteren Stellung.

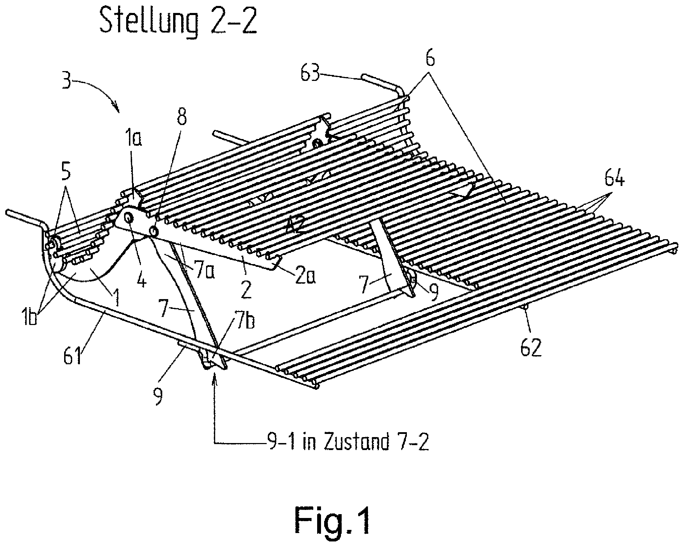

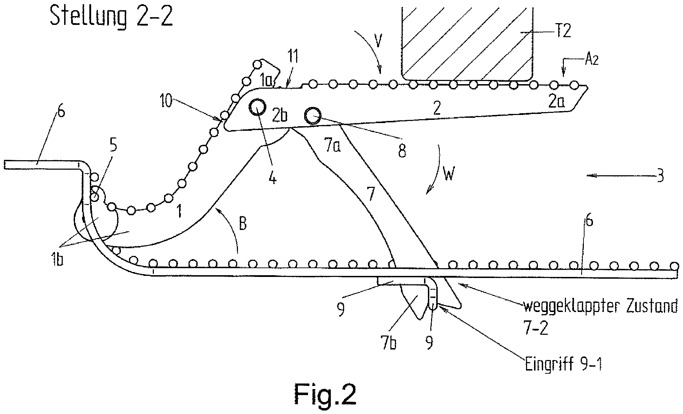

Figuren 1 und 2 zeigen ein Abtropfgitter 6 eines elektrisch betriebenen Kaffeevollautomaten (Kaffeevollautomat nicht gezeigt). Dieses umfasst drei parallel zueinander verlaufende, beabstandet voneinander angeordnet Tragholme 61, 62, 63. Quer zu den Tragholmen 61 bis 63 verlaufend ist auf diesen eine Vielzahl einzelner, parallel zueinander und beabstandet voneinander verlaufender Querträger 64 angeordnet. Diese sind im Bereich des ersten und zweiten Abschnitts 1, 2 entlang der Querträgerlängsachse gesehen in zwei Querträgerabschnitte geteilt (siehe nachfolgend). Der Abstand der einzelnen Querträger quer zu ihrer Längsachse ist dabei so gewählt, dass die Querträger einerseits eine stabile Aufstellfläche für ein Gefäß ausbilden, andererseits jeweils zwischen benachbarten Querträgern eine Lücke offenlassen, so dass vom Gefäß oder vom oberhalb des Abtropfgitters angeordneten Auslauf der Kaffeemaschine (nicht gezeigt) herabtropfende Flüssigkeit zwischen benachbarten Querträgern hindurch nach unten abtropfen kann.

Die erfindungsgemäße Abstellfläche 3, die in Figuren 1 bis 4 in ihrer obenliegenden Stellung, also in der zweiten Stellung 2-2 ihres zweiten Abschnitts 2 gezeigt ist, ist wie folgt in das Abtropfgitter 6 integriert, Zu einer Seite hin sind die Tragholmen 61 bis 63 kurvenförmig nach oben gebogen, so dass mehrere an diesem Ende angeordnete Querträger 64 gestaffelt übereinander angeordnet sind. Die zwischen den Tragholmen 62 und 63 verlaufenden Querträgerabschnitte sind fest mit den Tragholmen 62 und 63 verbunden, so dass ihre Oberseite einen relativ zu den Tragholmen 61 bis 63 feststehenden Abstellflächenabschnitt des Abtropfgitters 6 ausbilden. Zwischen den beiden Tragholmen 61 und 62 sind jedoch lediglich am hochgebogenen Ende zwei Querträger 64 und am diesem Ende gegenüberliegenden Ende des Abtropfgitters 6 lediglich fünf Querträger an der Oberseite der Tragholme 61 und 62 fixiert (diese insgesamt sieben Querträger 64 verlaufen somit durchgehend vom Tragholmen 61 über den Tragholmen 62 bis zum Tragholmen 63). Alle anderen Querträgerabschnitte zwischen den beiden Tragholmen 61 und 62 sind auf der Oberseite eines ersten Abschnitts 1 und eines zweiten Abschnitts 2 der höhenverstellbaren Abstellfläche 3 fixiert und somit relativ zu den Tragholmen 61 bis 63 nach oben klappbar,

Der erste Abschnitt 1 weist hierzu zwei parallel zueinander, beabstandet voneinander angeordnete, kurvenförmig gebogene Seitenträger auf, an deren Oberseite quer dazu verlaufend eine Mehrzahl von Querträgerabschnitten fixiert ist. Der eine Seitenträger ist nahe des Tragholms 61 angeordnet, der gegenüberliegende Seitenträger des ersten Abschnitts 1 nahe des Tragholms 62. Die beiden Seitenträger des ersten Abschnitts 1 sind an ihrem den hochgebogenen Abschnitten der Tragholme 61 bis 63 zugewandten Ende 1b drehgelenkig mit einem der beiden durchgehend vom Tragholm 61 zum Tragholm 63 verlaufenden, also an allen drei Tragholmen 61 bis 63 fixierten Querträger 64 verbunden. Dieser durchgehende Querträger 64 bildet somit eine erste Achse 5, um die der erste Abschnitt 1 bzw. dessen zweites Ende 1b drehbar gelagert ist.

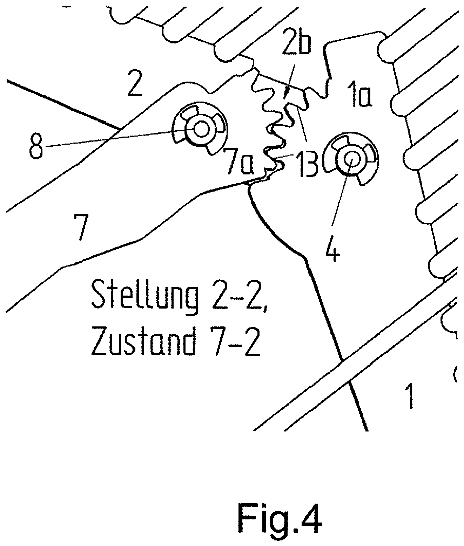

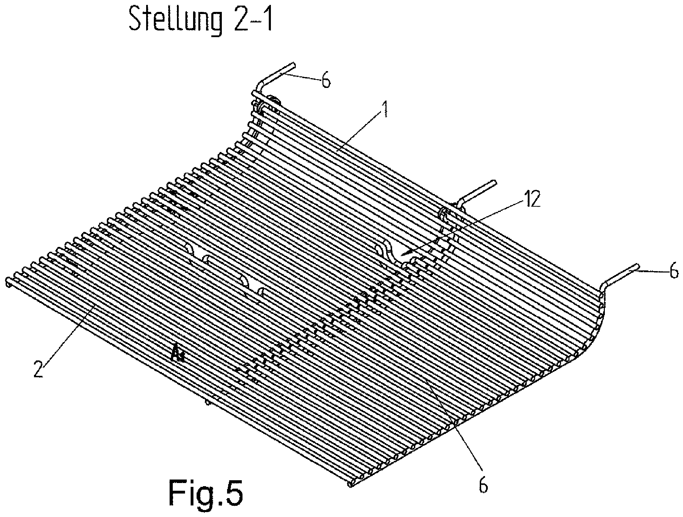

Der erste Abschnitt 1 lässt sich somit (Figur 2) aus seiner unteren, in das Abtropfgitter 6 integrierten Lage (vgl. z.B. Figur 5) mit seinem dem zweiten Ende 1b abgewandten Ende 1a nach oben verdrehen B. An diesem Ende 1a weist jeder der beiden Seitenträger des ersten Abschnitts 1 eine Drehgelenkverbindung 4 (vgl. Figur 4) auf, über die an jedem der beiden Seitenträger des ersten Abschnitts 1 jeweils ein Seitenträger eines zweiten Abschnitts 2 der höhenverstellbaren Stellfläche 3 drehbeweglich mit dem jeweiligen Seitenträger des ersten Abschnitts 1 verbunden ist. Die Drehgelenkverbindungen 4 zwischen dem ersten Abschnitt 1 und dem zweiten Abschnitt 2 bilden somit eine zweite Achse aus (die nachfolgend ebenfalls mit dem Bezugszeichen 4 bezeichnet ist), um die das dem ersten Abschnitt 1 zugewandte Ende 2b des zweiten Abschnitts bzw. der Seitenträger desselben relativ zum ersten Abschnitt 1 bzw. dessen erstem Ende 1a rotierbar ist. Auf der Oberseite der beiden Seitenträger des zweiten Abschnitts 2 weist dieser eine Mehrzahl von Querträgerabschnitten auf, die quer zu diesen Seitenträgern und von einem zum anderen Seitenträger des zweiten Abschnitts verlaufen. Diese Querträgerabschnitte bilden somit eine Aufstellfläche A₂ des zweiten Abschnitts 2 aus, die zum Aufstellen einer (kleinen) Tasse T₂ geeignet ist (Fig. 2).

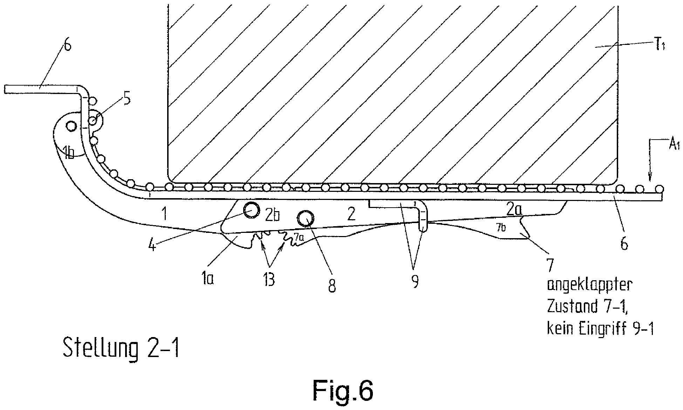

Wie Figur 5 zeigt, ist der zweite Abschnitt 2 in seiner unteren Stellung 2-1 ebenso wie der Abschnitt 1 in das Abtropfgitter 6 so integriert, dass die Querträgerabschnitte der Querträger 64 zwischen den Tragholmen 61 und 62 einerseits und zwischen den Tragholmen 62 und 63 andererseits jeweils durchgehend angeordnet sind, so dass vom feststehenden Teil des Abtropfgitters 6 zwischen den Tragholmen 62 und 63 sowie von den beweglichen Abschnitten 1, 2 zwischen den Tragholmen 61 und 62 eine große, durchgehende, ebene Aufstellfläche A₁ für eine große, hohe Tasse T₁ ausgebildet wird (vgl. Figur 6).

Figuren 1 und 2 zeigen, dass der zweite Abschnitt 2 in seiner oberen, zweiten Stellung 2-2 relativ zum ersten Abschnitt 1 gesehen von letzterem weg geklappt bzw. weggedreht V worden ist, so dass der zweite Abschnitt 2 in dieser Stellung 2-2 eine im Vergleich zur Position der Aufstellfläche A₁ erhöhte Position einnimmt, in der der zweite Abschnitt 2 die ebene, horizontal ausgerichtete, verkleinerte Aufstellfläche A₂ ausbildet. Das dem dem ersten Abschnitt 1 zugewandten Ende 2b des zweiten Abschnitts 2 gegenüberliegende, dem ersten Abschnitt 1 abgewandte Ende des zweiten Abschnitts 2 ist mit dem Bezugszeichen 2a bezeichnet.

Der erste und der zweite Abschnitt 1, 2 werden wie folgt in der oberen Stellung 2-2 des zweiten Abschnitts 2 stabil gehalten. Zwischen den beiden Enden 2b und 2a (näher zum Ende 2b gelegen) ist an jedem der beiden Seitenträger des zweiten Abschnitts 2 eine weitere Drehgelenkverbindung 8 ausgebildet, über die an jedem dieser beiden Seitenträger des zweiten Abschnitts 2 jeweils ein Seitenträger eines wegklappbaren Abstützelementes 7 drehbeweglich am zweiten Abschnitt 2 befestigt ist. Die beiden Drehgelenkverbindungen 8 an den beiden Seitenträgern des Abschnitts 2 bilden somit eine dritte Achse aus (die nachfolgend ebenfalls mit dem Bezugszeichen 8 bezeichnet ist), um die das dem zweiten Abschnitt 2 zugewandte Ende 7a der beiden Seitenträger des Abstützelementes 7 bzw. das Abstützelement 7 relativ zum zweiten Abschnitt 2 drehbar ist.

Die Drehung des Abstützelementes 7 um die dritte Achse 8 bzw. den zweiten Abschnitt 2 einerseits und die Drehung des zweiten Abschnitts 2 um die zweite Achse 4 bzw. den ersten Abschnitt 1 andererseits sind dabei nicht unabhängig voneinander, sondern durch eine mechanische Zwangsführung über eine Verzahnung 13 mechanisch miteinander gekoppelt. Wie Figur 4 zeigt, greift ein am dem zweiten Abschnitt 2 zugewandten Ende 7a des Abstützelementes 7 bzw. dessen Seitenträgern ausgebildeter Zahnkranz in einen an dem dem zweiten Abschnitt 2 zugewandten Ende 1a des ersten Abschnitts 1 bzw. dessen Seitenträgern ausgebildeten Zahnkranz kooperierend ein. Diese mechanische Kopplung bzw. Verzahnung, die zu einer Kopplung der Relativbewegung zwischen den Elementen 7 und 2 einerseits und den Elementen 2 und 1 andererseits führt, ist mit dem Bezugszeichen 13 versehen.

Die Ausformung der Elemente 1, 2 und 7 sowie deren Positionierung relativ zueinander (über die Achsen 4 und 8) erfolgt dabei so, dass ein Wegklappen V des zweiten Abschnitts 2 vom ersten Abschnitt 1 (das Schwerkraft-bedingt beim Hochklappen B des ersten Abschnitts 1 erfolgt) zu einem zwangsgeführten, gleichzeitigen Wegklappen W des Abstützelementes 7 (bzw. dessen der dritten Achse 8 abgewandt liegenden Endes 7b) führt. Dieses Ende 7b des Abstützelementes 7 bzw. von dessen Seitenträgern weist eine Einkerbung auf. Diese kooperiert mit einem an der Unterseite der beiden Tragholme 61 und 62 unbeweglich fixierten, quer zu diesen beiden Tragholmen und zwischen ihnen verlaufenden zusätzlichen Querträger (Gegenstück 9) so, dass in der oberen Stellung 2-2 des zweiten Abschnitts 2 ein Eingriff des Gegenstücks 9 und der am Ende 7b ausgebildeten Einkerbungen erfolgt. Die Positionierung der drei Drehachsen 4, 5, 8, die Positionierung des Gegenstücks 9, die Ausformung der Abschnitte 1 und 2 sowie des Abstützelementes 7 und die Ausformung und Positionierung der Einkerbungen am Ende 7b des Abstützelementes 7 erfolgen dabei so, dass im in Figur 2 gezeigten, weggeklappten Zustand 7-2 des Abstützelementes 7 (bezogen auf den zweiten Abschnitt 2), in dem das Abstützelement 7 in Eingriff 9-1 mit dem Gegenstück 9 steht, die auf der Oberseite des zweiten Abschnitts 2 angeordneten Querträgerabschnitte eine ebene, horizontale Aufstellfläche A₂ für die kleine Tasse T₂ in dieser oberen Stellung 2-2 des zweiten Abschnitts 2 ausbilden.

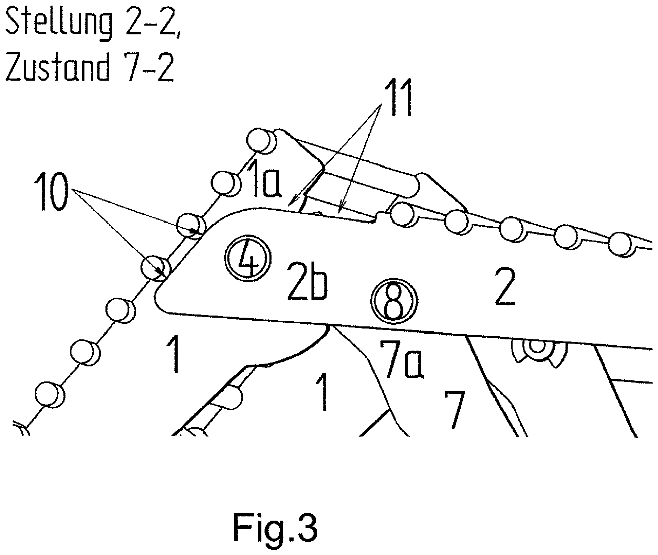

Statt eines einzigen Gegenstücks 9 können auch mehrere, z.B. genau zwei an der Unterseite der beiden Tragholme 61 und 62 unbeweglich fixierte, quer zu diesen beiden Tragholmen und zwischen ihnen verlaufende, entlang der Längsachsen der beiden Tragholme 61, 62 gesehen beabstandet voneinander positionierte Querträger (also mehrere Gegenstücke) vorhanden sein (nicht gezeigt). Wenn z.B. zwischen dem gezeigten Gegenstück 9 und den am dem ersten Abschnitt 1 gegenüberliegenden Ende des Abtropfgitters 6 fixierten, durchgehenden Querträgern 64 ein weiteres Gegenstück am Abtropfgitter 6 als Querträger fixiert wird, so lässt sich neben der gezeigten Abstützung und dem gezeigten Anschlag für die zweite (dann oberste) Stellung des Tisches eine weitere, dritte Stellung des zweiten Abschnitts 2 in einer Aufstellhöhe zwischen der ersten und der zweiten Stellung realisieren. Auch diese dritte Stellung bewirkt auf Grund der gelenkigen Lagerung an der ersten und der zweiten Achse 5, 4 eine horizontale Ausrichtung der Aufstellfläche A2. Wie Figuren 2 und 3 (Detail) zeigen, sind am dem ersten Abschnitt zugewandten Ende 2b des zweiten Abschnitts 2 im Bereich der Drehgelenkverbindung 4 zwei aneinander angrenzende mechanische Anschläge 10, 11 unter einem

Winkel von etwa 135° zueinander ausgebildet: Der mechanische Anschlag 10 und der weitere mechanische Anschlag 11. Letzterer ist parallel zur Oberkante der beiden Seitenträger des zweiten Abschnitts 2 an denselben ausgebildet, ersterer auf der Stirnseite des Endes 2b dieser beiden Seitenträger. Die Ausformung und Positionierung der beiden mechanischen Anschläge 10, 11 ist dabei so gestaltet, dass der Anschlag 10 ein weiteres Verkippen des zweiten Abschnitts 2 relativ zum ersten Abschnitt 1 in Richtung V aus der in Figur 2 gezeigten Position (und somit ein nach vorne Abkippen des zweiten Abschnitts 2 aus seiner Horizontallage) verhindert. Ein solches nach vorne Abkippen des zweiten Abschnitts 2 würde ansonsten geschehen, da die überwiegende Masse des zweiten Abschnitts 2 (von der Achse 4 aus gesehen) am Ende 2a des zweiten Abschnitts 2 über die Achse 8 hinauskragt. Der Eingriff 9-1 einerseits und der mechanische Anschlag 10 andererseits stabilisieren somit die in Figur 2 gezeigte Relativpositionierung der Elemente 1, 2, 7 und 9 (bzw. 6).

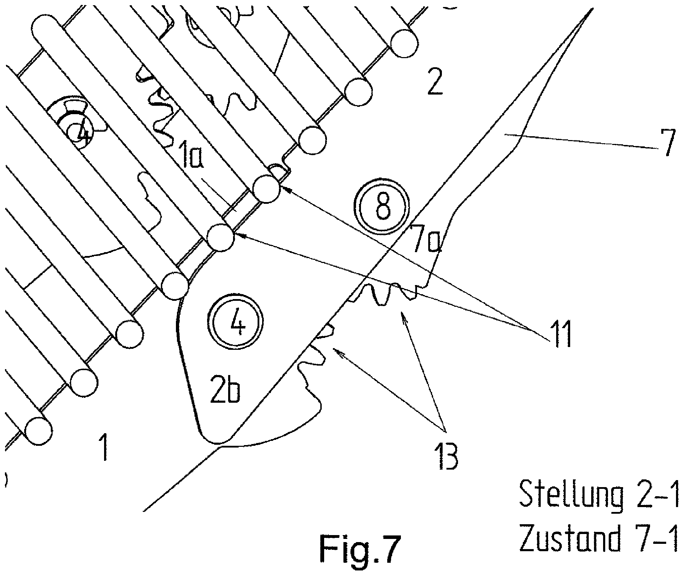

Wie Figuren 6 und 7 (Detail) zeigen, stabilisiert andererseits der weitere mechanische Anschlag 11 die Relativpositionierung der Elemente 1, 2, 7 und 9 (bzw. 6) im angeklappten Zustand 7-1 des Abstützelementes 7 am zweiten Abschnitt 2 in der Stellung 2-1 dieses Abschnitts 2, in der die beiden Abschnitte 1 und 2 vollständig integriert im Abtropfgitter 6 mit all ihren Querträgern bzw. Querträgerabschnitten 64 eine große Aufstellfläche A₁ für die große Tasse T₁ ausbilden. Der weitere mechanische Anschlag 11 verhindert, dass in entgegengesetzter Richtung zur Verdrehrichtung V (vgl. Figur 2) eine weitere Verdrehung des zweiten Abschnitts 2 relativ zum ersten Abschnitt 1 über die in Figur 6 gezeigte Lage hinaus, also ein Durchsacken der beiden Abschnitte 1 und 2 nach unten aus der Ebene der Abstellfläche A₁ hinaus, stattfindet. In der Stellung 2-1 des zweiten Abschnitts 2 findet somit im angeklappten Zustand 7-1 des Abstützelements kein Eingriff 9-1 statt.

Figur 5 zeigt schließlich, dass im hinteren, der Drehachse 5 zugewandten Bereich des ersten Abschnitts 1 mehrere nebeneinanderliegende Querträgerabschnitte abschnittsweise nach unten durchgebogen sind, um so eine als Aussparung ausgebildete Eingriffsmöglichkeit zur Verfügung zu stellen. Ein Benutzer der höhenverstellbaren Abstellfläche 3 kann mit einem Finger in diese Aussparung 12 eingreifen und somit den ersten Abschnitt 1 (samt des zweiten Abschnitts 2 und des daran drehbeweglich befestigten Abstützelementes 7) nach oben B ziehen, wodurch es durch die auf das überkragende Ende 2a des zweiten Abschnitts 2 wirkende Schwerkraft zu einem Ausklappen V des zweiten Abschnitts 2 und hierdurch vermittels der Zwangsführung 13 auch zu einem Wegklappen W des Abstützelementes 7 kommt. Durch die geeignete Positionierung des Gegenstücks 9 kann der Benutzer die Abstellfläche 3 einfach fallenlassen, wenn er den ersten Abschnitt 1 genügend hoch gezogen B hat: Die Einkerbung im Ende 7b des Abstützelementes 7 fällt dann Schwerkraft-bedingt automatisch auf Höhe des Gegenstücks 9 genau auf letzteres, so dass der Eingriff 9-1 resultiert.

Die Bewegungen um die beiden Achsen 4 und 5 sind somit unabhängig voneinander möglich und mechanisch nicht gekoppelt. Die Drehbewegungen um die beiden Achsen 4 und 8 sind über die Verzahnung 13 an den beiden Elementen 2 und 7 gekoppelt bzw. zwangsgeführt, d.h. wenn Abschnitt 2 in die Horizontale geschwenkt wird, wird automatisch über die Verzahnung 13 und die Drehbewegung um die Achse 8 das Abstützelement 7 herausgeschwenkt. Die beiden Seitenträger des Abschnitts 2 haben jeweils zwei Anschlagsflächen 10, 11. Der Anschlag 11 begrenzt die Schwenkbewegung auf die abgesenkte Position des zweiten Abschnitts 2 und der Anschlag 10 begrenzt die Schwenkbewegung auf die angehobene Horizontalposition. Durch Anheben des zweiten Abschnitts 2 in dessen dem ersten Abschnitt zugewandten Bereich (erleichtert durch die Griffmulde 12 im ersten Abschnitt 1) erfolgt die Dreh- und Schwenkbewegung um die drei Achsen 4, 5 und 8 gleichzeitig über die auf die Elemente 2 und 7 wirkende Schwerkraft. Für die Rückstellung und umgekehrte Bewegungsreihenfolge muss der zweite Abschnitt 2 nur im vorderen (also dem ersten Abschnitt abgewandten) Bereich angehoben werden und kann dann fallengelassen werden, wodurch sich Schwerkraft-bedingt automatisch der in den Figuren 5 bis 7 gezeigte Zustand einstellt.

## Patentansprüche

1. Höhenverstellbare Abstellfläche (3) zum Abstellen von Behältnissen (T₁,T₂) zur Getränkeaufnahme,
wobei die Abstellfläche (3) zwei relativ zueinander verdreh- oder verschwenkbare Abstellflächenabschnitte, nämlich einen ersten Ab- schnitt (1) und einen zweiten Abschnitt (2), aufweist,
wobei der erster Abschnitt (1) lageändernd im Raum bewegbar ist und wobei durch eine lageändernde Bewegung (B) des ersten Abschnitts (1) und durch ein Verdrehen oder Verschwenken (V) des ersten und des zweiten (2) Abschnitts relativ zueinander der zweite Ab- schnitt (2) aus einer ersten, zum Aufstellen eines Behältnisses (T₁) auf den zweiten Abschnitt (2) geeigneten Stellung (2-1) in eine zweite, ebenfalls zum Aufstellen eines Behältnisses (T₂) auf den zweiten Abschnitt (2) geeignete Stellung (2-2) verbringbar ist
***dadurch gekennzeichnet, dass***
der erste Abschnitt (1) zum lageändernden Bewegen im Raum um eine erste Achse (5) verdreh- oder verschwenkbar ist.

2. Abstellfläche (3) nach dem vorhergehenden Anspruch,
***dadurch gekennzeichnet, dass***
der erste Abschnitt (1) und der zweite Abschnitt (2) relativ zueinander um eine zweite Achse (4) verdreh- oder verschwenkbar sind,
wobei durch die lageändernde Bewegung (B) des ersten Abschnitts (1) und durch das Verdrehen oder Verschwenken (V) des ersten (1) und des zweiten (2) Abschnitts relativ zueinander um die zweite Achse (4) der zweite Abschnitt (2) aus der ersten (2-1) in die zweite Stellung (2-2) verbringbar ist.

3. Abstellfläche (3) nach einem der vorhergehenden Ansprüche,
***dadurch gekennzeichnet, dass***
der erste Abschnitt (1) mit einem ersten Ende (1a) am zweiten Abschnitt (2) drehbar oder verschwenkbar gelagert ist, bevorzugt - bei Rückbezug auf Anspruch 2 - relativ zum zweiten Abschnitt (2) um die zweite Achse (4) drehbar gelagert ist, und dass der erste Abschnitt (1) an einem seinem ersten Ende (1a) gegenüberliegenden, zweiten Ende (1b) zum lageändernden Bewegen drehbar oder verschwenkbar gelagert ist, bevorzugt um die erste Achse (5) drehbar oder verschwenkbar gelagert ist.

4. Abstellfläche (3) nach dem vorhergehenden Anspruch,
***dadurch gekennzeichnet, dass***
der erste Abschnitt (1) mit seinem zweiten Ende (1b) an einem Gehäuse einer Vorrichtung zum Getränkezubereiten, insbesondere einer elektrisch betriebenen Kaffeemaschine, und/oder an einem an einem solchen Gehäuse fixierten oder fixierbaren Bauelement (6) einer solchen Vorrichtung drehbar oder verschwenkbar gelagert ist.

5. Abstellfläche (3) nach dem vorhergehenden Anspruch,
***dadurch gekennzeichnet, dass***
das Bauelement ein Abtropfgitter (6) der Vorrichtung ist, wobei das Abtropfgitter (6) und die beiden Abschnitte (1,2) so ausgeformt, positioniert und miteinander kooperierend sind, dass in der ersten Stellung (2-1) der zweite Abschnitt (2) formschlüssig in das Abtropfgitter (6) integriert ist und zusammen mit dem Abtropfgitter (6) eine Aufstellfläche (A₁) für ein Behältnis (T₁) ausbildet und dass in der zweiten Stellung (2-2) der zweite Abschnitt (2) eine relativ zum Abtropfgitter (6) heraus geklappte, bevorzugt nach oben geklappte, Aufstellfläche (A₂) für ein Behältnis (T₂) ausbildet.

6. Abstellfläche (3) nach einem der vorhergehenden Ansprüche,
***dadurch gekennzeichnet, dass***
der zweite Abschnitt (2) in der ersten (2-1) und in der zweiten (2-2) Stellung jeweils eine horizontal ausgerichtete Fläche (A₁, A₂) zum Aufstellen eines Behältnisses (T₁,T₂) bietet, wobei die Fläche der ersten Stellung (2-1) unterhalb der Fläche der zweiten Stellung (2-2) liegt.

7. Abstellfläche (3) nach einem der vorhergehenden Ansprüche,
***gekennzeichnet durch***
ein vom zweiten Abschnitt (2) wegklappbares Abstützelement (7), das am zweiten Abschnitt (2) beweglich so gelagert ist, dass mit ihm (7) im weggeklappten Zustand (7-2) eine stabile horizontale Ausrichtung des zweiten Abschnitts (2) in seiner zweiten Stellung (2-2) herstellbar ist,
wobei bevorzugt das Abstützelement (7) an einem seiner Enden, das nachfolgend als sein erstes Ende (7a) bezeichnet ist, drehbar oder schwenkbar mit dem zweiten Abschnitt (2) verbunden ist, wobei bevorzugt das Abstützelement (7) relativ zum zweiten Abschnitt (2) um eine dritte Achse (8) verdrehbar ist.

8. Abstellfläche (3) nach dem vorhergehenden Anspruch bei Rückbezug auf einen der Ansprüche 4 oder 5,
***dadurch gekennzeichnet, dass***
das dem ersten Ende (7a) abgewandte Ende (7b) des Abstützelements (7) mit einem am Bauelement (6) unbeweglich fixierten Gegenstück (9) mechanisch so in Eingriff (9-1) bringbar ist, dass die stabile horizontale Ausrichtung des zweiten Abschnitts (2) in seiner zweiten Stellung (2-2) durch zumindest Anteile der Gewichtskraft des ersten (1) und/oder des zweiten (2) Abschnitts herstellbar ist.

9. Abstellfläche (3) nach dem vorhergehenden Anspruch,
***dadurch gekennzeichnet, dass***
neben dem Gegenstück (9) noch mindestens ein, bevorzugt genau ein, weiteres Gegenstück beabstandet vom Gegenstück (9) unbeweglich am Bauelement (6) so fixiert ist, dass das dem ersten Ende (7a) abgewandte Ende (7b) des Abstützelements (7) ebenfalls mit dem weiteren Gegenstück mechanisch in Eingriff bringbar ist, so dass neben der stabilen horizontalen Ausrichtung des zweiten Abschnitts (2) in seiner zweiten Stellung (2-2) mindestens eine weitere stabile horizontale Ausrichtung des zweiten Abschnitts (2) in mindestens einer weiteren Stellung durch zumindest Anteile der Gewichtskraft des ersten (1) und/oder des zweiten (2) Abschnitts herstellbar ist.

10. Abstellfläche (3) nach einem der drei vorhergehenden
Ansprüche bei Rückbezug auf Anspruch 3,
***dadurch gekennzeichnet, dass**,*
ausgehend von der dritten Achse (8) gesehen, der zweite Abschnitt (2) mit seiner der Seite der zweiten Achse (4) gegenüberliegenden Seite über die dritte Achse (8) hinaus überkragt,
wobei die Masse des überkragenden Teils (2a) des zweiten Abschnitts größer ist, als die Masse des diesem überkragenden Teil (2a) ausgehend von der dritten Achse (8) gesehen gegenüberliegenden Teils (2b) des zweiten Abschnitts (2), mittels dessen (2b) der erste Abschnitt) mit seinem ersten Ende (1a) um die zweite Achse (4) drehbar am zweiten Abschnitt (2) gelagert ist, und
wobei am besagten gegenüberliegenden Teil (2b) des zweiten Abschnitts (2) ein in der zweiten Stellung (2-2) am ersten Abschnitt (1) anstoßender mechanischer Anschlag (10) ausgebildet ist.

11. Abstellfläche (3) nach einem der vorhergehenden Ansprüche bei Rückbezug auf Anspruch 7,
***dadurch gekennzeichnet, dass***
die bewegliche Lagerung des Abstützelements (7) am zweiten Abschnitt (2) einerseits und die Verdrehbarkeit oder Verschwenkbarkeit des ersten (1) und des zweiten (2) Abschnitts relativ zueinander andererseits so mechanisch miteinander gekoppelt (13) sind, dass durch das Verbringen des zweiten Abschnitts (2) in die zweite Stellung (2-2) ein zwangsgeführtes Wegklappen des Abstützelements (7) erfolgt.

12. Abstellfläche (3) nach einem der vorhergehenden Ansprüche,
***dadurch gekennzeichnet, dass***
der zweite Abschnitt (2) an seinem dem ersten Abschnitt (1) zugewandten Ende (2b) einen weiteren, in der ersten Stellung (2-1) am ersten Abschnitt (1) anstoßenden mechanischen Anschlag (11) aufweist, mittels dessen die mechanische Stabilität einer aus zumindest Teilen des ersten Abschnitts (1) und aus zumindest Teilen des zweiten Abschnitts (2) ausgebildeten, zum Aufstellen eines Behältnisses (T₁) geeigneten Stellfläche in der ersten Stellung (2-1) gewährleistet werden kann.

13. Abstellfläche (3) nach einem der vorhergehenden Ansprüche,
***dadurch gekennzeichnet, dass***
ein schwerkraftbedingtes Rückführen des zweiten Abschnitts (2) aus der zweiten Stellung (2-2) zurück in die erste Stellung (2-1) ermöglicht ist,
wobei bevorzugt - bei Rückbezug auf Anspruch 8 oder 9 - dieses schwerkraftbedingte Rückführen des zweiten Abschnitts (2) aus der zweiten Stellung (2-2) in die erste Stellung (2-1) nach Lösen des Eingriffs (9-1) von Abstützelement (7) und Gegenstück (9) ermöglicht ist.

14. Vorrichtung zum Getränkezubereiten, insbesondere elektrisch betriebene Kaffeemaschine, mit einer höhenverstellbaren Abstellfläche (3) nach einem der vorhergehenden Ansprüche, wobei der erste Abschnitt an einem/dem Gehäuse dieser Vorrichtung und/oder an einem/dem an einem solchen Gehäuse fixierten oder fixierbaren Bauelement (6) einer solchen Vorrichtung drehbar oder verschwenkbar gelagert ist.

## Claims

1. Height-adjustable storage area (3) to store containers (T₁, T₂) for receiving beverages,
wherein the storage area (3) has two storage portions, namely a first portion (1) and a second portion (2), which can be rotated or pivoted relative to one another,
wherein the first portion (1) can be moved for repositioning purposes in space, and wherein, by virtue of a repositioning movement (B) of the first portion (1) and of rotation or pivoting (V) of the first and of the second (2) portions relative to one another, the second portion (2) can be displaced from a first position (2-1), which is suitable for positioning a container (T₁) on the second portion (2), into a second position (2-2), which is likewise suitable for positioning a container (T₂) on the second portion (2),
**characterized in that**,
for the repositioning movement in space, the first portion (1) can be rotated or pivoted about a first axis (5).

2. Storage area (3) according to the preceding claim,
**characterized in that**
the first portion (1) and the second portion (2) can be rotated or pivoted relative to one another about a second axis (4),
wherein, by virtue of the repositioning movement (B) of the first portion (1) and of rotation or pivoting (V) of the first (1) and of the second (2) portions relative to one another about the second axis (4), the second portion (2) can be displaced from the first position (2-1) into the second position (2-2).

3. Storage area (3) according to either of the preceding claims,
**characterized in that**
the first portion (1) has a first end (1a) mounted in a rotatable or pivotable manner on the second portion (2), preferably - with reference back to Claim 2 - it is mounted such that it can be rotated about the second axis (4) relative to the second portion (2), and **in that** at a second end (1b), which is located opposite its first end (1a), the first portion (1) is mounted in a rotatable or pivotable manner for the repositioning movement, preferably it is mounted such that it can be rotated or pivoted about the first axis (5).

4. Storage area (3) according to the preceding claim,
**characterized in that**
the first portion (1) has its second end (1b) mounted in a rotatable or pivotable manner on a housing of an apparatus for preparing beverages, in particular an electrically operated coffee machine, and/or on a component (6) of such an apparatus, said component being fixed, or fixable, on such a housing.

5. Storage area (3) according to the preceding claim,
**characterized in that**
the component is a drip tray (6) of the apparatus, wherein the drip tray (6) and the two portions (1, 2) are formed and positioned, and cooperate with one another, such that, in the first position (2-1), the second portion (2) is integrated in a form-fitting manner in the drip tray (6) and, together with the drip tray (6), forms a storage area (A₁) for a container (T₁), and **in that**, in the second position (2-2), the second portion (2) forms a storage area (A₂) for a container (T₂), said storage area being swung out, preferably swung upwards, relative to the drip tray (6).

6. Storage area (3) according to one of the preceding claims,
**characterized in that**,
in the first (2-1) and in the second (2-2) positions, the second portion (2) respectively provides a horizontally oriented surface (A₁, A₂) on which to store a container (T₁, T₂), wherein the surface of the first position (2-1) is located beneath the surface of the second position (2-2).

7. Storage area (3) according to one of the preceding claims,
**characterized by**
a supporting element (7), which can be swung away from the second portion (2) and is mounted in a movable manner on the second portion (2) such that, with the supporting element (7) in the swung-away state (7-2), it is possible to establish a stable horizontal orientation of the second portion (2) in its second position (2-2),
wherein at one of its ends, which is referred to hereinbelow as its first end (7a), preferably the supporting element (7) is connected to the second portion (2) in a rotatable or pivotable manner, wherein preferably the supporting element (7) can be rotated about a third axis (8) relative to the second portion (2).

8. Storage area (3) according to the preceding claim, with reference back to either of Claims 4 and 5,
**characterized in that**
the end (7b) of the supporting element (7), said end being directed away from the first end (7a), can be brought into mechanical engagement (9-1) with a counterpart (9), which is fixed in an immovable manner on the component (6), such that it is possible to establish the stable horizontal orientation of the second portion (2) in its second position (2-2) by way of at least fractions of the weight of the first (1) and/or of the second (2) portions.

9. Storage area (3) according to the preceding claim,
**characterized in that**,
alongside the counterpart (9), there is also at least one, preferably precisely one, further counterpart fixed in an immovable manner on the component (6), at a distance from the counterpart (9), such that the end (7b) of the supporting element (7), said end being directed away from the first end (7a), can likewise be brought into mechanical engagement with the further counterpart, and therefore, in addition to the stable horizontal orientation of the second portion (2) in its second position (2-2), it is possible to establish at least one further stable horizontal orientation of the second portion (2) in at least one further position by way of at least fractions of the weight of the first (1) and/or of the second (2) portions.

10. Storage area (3) according to one of the three preceding claims, with reference back to Claim 3,
**characterized in that**,
as seen from the third axis (8), the second portion (2) projects beyond the third axis (8) by way of its end which is located opposite the end with the second axis (4),
wherein the mass of the projecting part (2a) of the second portion is greater than the mass of the part (2b) of the second portion (2), which part (2b) is located opposite said projecting part (2a), as seen from the third axis (8), and by means of which (2b) the first portion has its first end (1a) mounted on the second portion (2) such that it can be rotated about the second axis (4),
and
wherein said opposite part (2b) of the second portion (2) has formed on it a mechanical stop (10), which in the second position (2-2) butts against the first portion (1).

11. Storage area (3) according to one of the preceding claims, with reference back to Claim 7,
**characterized in that**
the movable mounting of the supporting element (7) on the second portion (2), on the one hand, and the rotatability or pivotability of the first (1) and of the second (2) portions relative to one another, on the other hand, are coupled to one another mechanically (13) such that displacement of the second portion (2) into the second position (2-2) inevitably causes the supporting element (7) to swing away.

12. Storage area (3) according to one of the preceding claims,
**characterized in that**
at its end (2b), which is directed towards the first portion (1), the second portion (2) has a further mechanical stop (11), which in the first position (2-1) butts against the first portion (1) and by means of which it is possible to ensure the mechanical stability, in the first position (2-1), of a set-down surface which is formed from at least parts of the first portion (1) and from at least parts of the second portion (2) and on which a container (T₁) can be positioned.

13. Storage area (3) according to one of the preceding claims,
**characterized in that**
gravity-induced return of the second portion (2) from the second position (2-2) back into the first position (2-1) is made possible,
wherein preferably - with reference back to Claim 8 or 9 - this gravity-induced return of the second portion (2) from the second position (2-2) into the first position (2-1) is made possible once the engagement (9-1) between the supporting element (7) and counterpart (9) has been released.

14. Apparatus for preparing beverages, in particular electrically operated coffee machine, having a height-adjustable set-down surface (3) according to one of the preceding claims, wherein the first portion is mounted in a rotatable or pivotable manner on a/the housing of said apparatus and/or on a/the component (6) of such an apparatus, said component being fixed, or fixable, on such a housing.

## Revendications

1. Surface de stockage (3) réglable en hauteur pour le stockage de récipients (T1, T2) pour le logement de boissons,
la surface de stockage (3) comprenant deux portions de surface de stockage tournant ou pivotant l'une par rapport à l'autre, à savoir une première portion (1) et une deuxième portion (2),
la première portion (1) pouvant être déplacée en changeant sa position dans l'espace, et un mouvement de changement de position (B) de la première portion (1) et une rotation ou un pivotement (V) des première et deuxième (2) portions l'une par rapport à l'autre permettant d'amener la deuxième portion (2) d'une première position inclinée (2-1) pour positionner un récipient (T1) sur la deuxième portion (2), vers une deuxième position inclinée (2-2), également pour positionner un récipient (T2) sur la deuxième portion (2),
**caractérisée en ce que**
la première portion (1) peut être tournée ou pivotée autour d'un premier axe (5) pour effectuer un mouvement de changement de position dans l'espace.

2. Surface de stockage (3) selon la revendication précédente,
**caractérisée en ce que**
la première portion (1) et la deuxième portion (2) peuvent tourner ou pivoter l'une par rapport à l'autre autour d'un deuxième axe (4),
le mouvement de changement de position (B) de la première portion (1) et la rotation ou le pivotement (V) de la première portion (1) et la deuxième portion (2) l'une par rapport à l'autre autour du deuxième axe (4) permet d'amener la deuxième portion (2) de la première position (2-1) vers la deuxième position (2-2).

3. Surface de stockage (3) selon l'une des revendications précédentes,
**caractérisée en ce que**
la première portion (1) est logée de manière rotative ou pivotante avec une première extrémité (1a) au niveau de la deuxième portion (2), de préférence, en référence à la revendication 2, est logée de manière rotative par rapport à la deuxième portion (2) autour du deuxième axe (4), et **en ce que** la première portion (1) est logée de manière rotative ou pivotante pour le mouvement de changement de position, au niveau de sa deuxième extrémité (1b) opposée à la première extrémité (1a), de préférence est logée de manière rotative ou pivotante autour du premier axe (5).

4. Surface de stockage (3) selon la revendication précédente,
**caractérisée en ce que**
la première portion (1) est logée de manière rotative ou pivotante, avec sa deuxième extrémité (1b), au niveau d'un boîtier d'un dispositif pour la préparation de boissons, plus particulièrement d'une machine à café électrique, et/ou au niveau d'un composant, fixé ou pouvant être fixé à ce boîtier, d'un tel dispositif.

5. Surface de stockage (3) selon la revendication précédente,
**caractérisée en ce que**
le composant est une grille d'égouttage (6) du dispositif, la grille d'égouttage (6) et les deux portions (1, 2) étant formées, positionnées et interagissant entre elles de façon à ce que, dans la première position (2-1), la deuxième portion (2) soit intégrée par complémentarité de forme dans la grille d'égouttage (6) et, conjointement avec la grille d'égouttage (6), une surface de stockage (A1) pour un récipient (T1) soit réalisée, et de façon à ce que, dans la deuxième position (2-2), la deuxième portion (2) forme une surface de stockage (A2) rabattue vers l'extérieur, de préférence rabattue vers le haut, par rapport à la grille d'égouttage (6), pour un récipient (T2).

6. Surface de stockage (3) selon l'une des revendications précédentes,
**caractérisée en ce que**
la deuxième portion (2) offre, respectivement dans la première position (2-1) et dans la deuxième position (2-2), une surface (A1, A2) orientée horizontalement pour le positionnement d'un récipient (T1, T2), la surface de la première position (2-1) se trouvant en dessous de la surface de la deuxième position (2-2).

7. Surface de stockage (3) selon l'une des revendications précédentes,
**caractérisée par**
un élément d'appui (7), pouvant être rabattu à distance de la deuxième portion (2), qui est logé de manière mobile au niveau de la deuxième portion (2) de façon à ce que, avec lui (7) dans l'état rabattu (7-2), il soit possible d'établir une orientation horizontale stable de la deuxième portion (2) dans sa deuxième position (2-2),
de préférence l'élément d'appui (7) étant relié, au niveau d'une de ses extrémités, désignée par la suite comme sa première extrémité (7a), de manière rotative ou pivotante avec la deuxième portion (2), de préférence l'élément d'appui (7) étant rotatif par rapport à la deuxième portion (2) autour d'un troisième axe (8).

8. Surface de stockage (3) selon la revendication précédente, en référence à une des revendications 4 ou 5,
**caractérisée en ce que**
l'extrémité (7b), opposée à la première extrémité (7a), de l'élément d'appui (7) peut être emboîtée (9-1) mécaniquement avec une contre-pièce (9) fixée de manière immobile au composant (6), de façon à ce que l'orientation horizontale stable de la deuxième portion (2) dans sa deuxième position (2-2) puisse être établie par au moins une partie de la force de pesanteur de la première (1) et/ou de la deuxième portion (2).

9. Surface de stockage (3) selon la revendication précédente,
**caractérisée en ce que**
en plus de la contre-pièce (9) est fixée encore au moins une, de préférence exactement une, autre contre-pièce, à distance de la contre-pièce (9), de manière immobile sur le composant (6), de façon à ce que l'extrémité (7b), opposée à la première extrémité (7a), de l'élément d'appui (7) puisse également être emboîtée mécaniquement avec l'autre contre-pièce de façon à ce que, en plus de l'orientation horizontale stable de la deuxième portion (2) dans sa deuxième position (2-2), au moins autre une orientation horizontale stable de la deuxième portion (2) puisse être établie dans au moins une autre position par au moins une partie de la force de pesanteur de la première (1) et/ou de la deuxième portion (2).

10. Surface de stockage (3) selon l'une des trois revendications précédentes, en référence à la revendication 3,
**caractérisée en ce que**
vu à partir du troisième axe (8), la deuxième portion (2) est en saillie, avec son côté opposé au côté du deuxième axe (4), au-delà du troisième axe (8),
la masse de la partie en saillie (2a) de la deuxième portion étant supérieure à la masse de la partie en saillie (2b) de la deuxième portion (2), opposée à cette partie en saillie (2a), vue à partir du troisième axe (8), au moyen de laquelle (2b) la première portion est logée, avec sa première extrémité (1a) de manière rotative autour du deuxième axe (4) au niveau de la deuxième portion (2), et
au niveau de ladite partie opposé (2b) de la deuxième portion (2), est réalisée une butée mécanique (10) butant, dans la deuxième position (2-2), contre la première portion (1).

11. Surface de stockage (3) selon l'une des revendications précédentes, en référence à la revendication 7,
**caractérisée en ce que**
le logement mobile de l'élément d'appui (7) au niveau de la deuxième portion (2), d'une part, et la capacité de rotation ou de pivotement de la première portion (1) et de la deuxième portion (2) l'une par rapport à l'autre, d'autre part, sont couplés (13) mécaniquement entre eux de façon à ce que le positionnement de la deuxième portion (2) dans la deuxième position (2-2) permette un rabattement forcé de l'élément d'appui (7).

12. Surface de stockage (3) selon l'une des revendications précédentes,
**caractérisée en ce que**
la deuxième portion (2) comprend, au niveau de son extrémité (2b) orientée vers la première portion (1), une autre butée mécanique (11) butant, dans la première position (2-1), contre la première portion (1), au moyen de laquelle la stabilité mécanique d'une surface de stockage adaptée au positionnement d'un récipient (T1), constituée au moins de parties de la première portion (1) et au moins de parties de la deuxième portion (2), dans la première position (1-1), peut être garantie.

13. Surface de stockage (3) selon l'une des revendications précédentes,
**caractérisée en ce que**
un retour par la force de pesanteur de la deuxième portion (2), de la deuxième position (2-2) à la première position (2-1), est possible,
de préférence, en référence à la revendication 8 ou 9, ce retour par la force de pesanteur de la deuxième portion (2), de la deuxième position (2-2) à la première position (2-1), étant possible après le déboîtement (9-1) de l'élément d'appui (7) et de la contre-pièce (9).

14. Dispositif de préparation de boissons, plus particulièrement machine à café électrique, avec une surface de stockage (3) réglable en hauteur selon l'une des revendications précédentes, la première portion étant logée de manière rotative ou pivotante au niveau d'un/du boîtier de ce dispositif et/ou au niveau d'un/du composant (6) de ce dispositif fixé ou pouvant être fixé sur ce boîtier.
